# EUROPEAN PATENT SPECIFICATION

(11) **EP 2 716 831 B1**
(45) Date of publication and mention of the grant of the patent: **02.08.2017**
(21) Application number: 12792745.7
(22) Date of filing: 03.04.2012
(51) Int. Cl.: E04C 2/24, B32B 21/08, B32B 27/06, B32B 27/14, B32B 27/42

(54) **PANEL HAVING A MELAMINE COVERING**
TAFEL MIT EINER MELAMINABDECKUNG
PANNEAU À REVÊTEMENT DE MÉLAMINE

(30) Priority: 27.05.2011 ES 201100591 P
(43) Date of publication of application: 09.04.2014
(73) Proprietor: Barberan Latorre, Jesús Francisco, 08860 Castelldefels (Barcelona) (ES)
(72) Inventor: Barberan Latorre, Jesús Francisco, 08860 Castelldefels (Barcelona) (ES)
(74) Representative: Intès, Didier Gérard André
(86) International application number: PCT/ES2012/000086
(87) International publication number: WO 2012/164113

(56) References cited:
- US-A1- 2004 080 250
- DATABASE WPI Thomson Scientific, London, GB; AN 2008-K85754 XP002729446, & KR 2007 0118469 A (PARK SOO WON) 17 December 2007 (2007-12-17)
- DATABASE WPI Derwent Publications Ltd., London, GB; AN 2008-K85754, XP055125951 & KR 2007 0 118 469 A (PARK SOO WON) 17 December 2007
- DATABASE WPI Derwent Publications Ltd., London, GB; AN 1993-040212, XP055126191 & JP 4 364 943 A (KOHJIN CO) 17 December 1992
- DATABASE WPI Derwent Publications Ltd., London, GB; AN 2009-N38379, XP055126192 & JP 2009 202467 A (SUMITOMO BAKELITE CO) 10 September 2009
- DATABASE WPI Derwent Publications Ltd., London, GB; AN 1995-181500, XP055126193 & JP 5 318 669 A (KOHJIN CO) 03 December 1993

## Description

### Field of the Art

The present invention relates to panels used to build furniture and similar applications, formed by a particle board on which a melamine covering is arranged, proposing a panel of this type with a finish that improves the aesthetic appearance of the panel for application.

### State of the Art

When building furniture and other similar applications, it is common to use panels formed by a board made of an inexpensive material, such as particle board or boards of other low-quality materials, a covering being provided on said board determining the desired aesthetic appearance of the panel, such a panel was disclosed, for instance in US 2004/080250.

A type of covering used in panels of that type is melamine, which is an organic composite material with many good features in aspects relating to: color, high softening point, low flowability, insolubility in common solvents, resistance to alkalis, low loss factor, insulation resistance and dielectric strength; such that panels with a good finish and advantageous properties in the mentioned aspects are obtained with said covering.

Given their properties, melamine coverings are conventionally used as a finishing for the panels in which they are applied because it is a suitable material itself as an outer surface layer.

However, it has been found with current techniques that high-gloss surface finishings considerably improve the aesthetic appearance offered in panels with coverings. This is difficult with melamine coverings due to the surface having little adherence determined by this material.

### Object of the Invention

According to the invention, a panel having an inexpensive structuring is proposed, in which a melamine covering is provided on which a high-gloss finish is applied, using the advantages of both systems.

This panel object of the invention comprises a particle board on which a melamine sheet is arranged, and on said sheet there is arranged a layer of hot-melt varnish, on the latter there is arranged an outer high-gloss varnish.

A panel is thus obtained in which the inner board determines the necessary consistency with an inexpensive structuring, whereas the melamine covering provides a desired aesthetic appearance, the layer of hot-melt varnish determining a suitable fixing of the outer high-gloss varnish, which optimizes the aesthetic appearance, providing a high-quality finishing improving the aesthetic properties of melamine by itself.

As a result, said panel object of the invention has very advantageous features, acquiring its own identity and preferred character with respect to the panels of the same application formed with a melamine covering as the outer finishing.

### Description of the Drawings

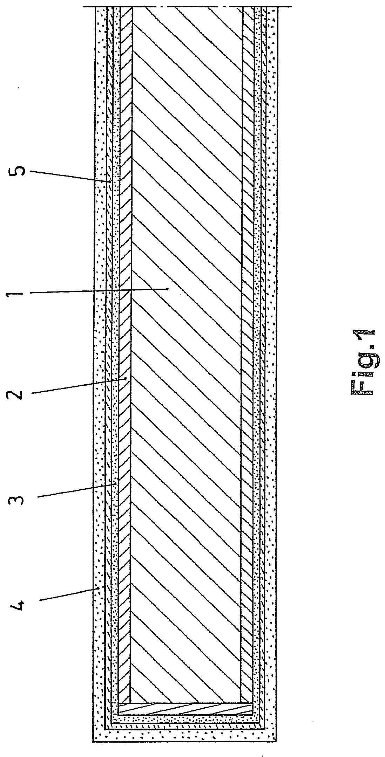

Figure 1 shows a cross-section in which the structural distribution of a panel formed according to the invention is seen.

### Detailed Description of the Invention

The object of the invention relates to a panel of the type used in building furniture and similar applications, formed by a particle board (1) on which a covering is provided offering the desired aesthetic appearance of the panel.

According to the invention, the covering arranged on the board (1) in order to provide a structural core of the panel comprises a melamine sheet (2) on which a layer (3) of hot-melt varnish is arranged, and on which an outer high-gloss varnish (4) is in turn provided.

Said outer high-gloss varnish (4) can be placed directly on the layer (3) of hot-melt varnish, or it can be combined with an ultraviolet background (5) that is included between said outer high-gloss varnish (4) and the layer (3) of hot-melt varnish.

This results in a panel in which the inner board (1) determines suitable structural resistance, with an advantageous economic character due to the low-quality material of said board (1).

The covering provided on the board (1) in turn offers an aesthetic appearance making the panel suitable for being applied to building furniture and similar applications, said aesthetic appearance being able to be determined selectively with different appearances, for example imitating woods, metals, etc., by means of using a melamine sheet (2) that corresponds to the desired appearance in each case.

The outer high-gloss varnish (4) furthermore optimizes the aesthetic appearance aspect, determining a high-quality finish that improves qualities of the panel for application.

The layer (3) of hot-melt varnish acts as an adhesive bridge, providing suitable adherence of the outer high-gloss varnish (4) with respect to the melamine sheet (2), the structuring of the panel therefore being perfectly consistent, reconciling the qualities of melamine coverings with the qualities of high-gloss finishes.

## Claims

1. A panel having a melamine covering, comprising a particle board (1) on which a covering is provided determining the aesthetic appearance of the panel, **characterized in that** the covering determining the aesthetic appearance comprises a melamine sheet (2), an outer finishing varnish and a layer (3) of hot-melt varnish arranged on the melamine sheet (2) in order to provide an adhesive bridge between said melamine sheet (2) and the outer finishing varnish (4).

2. The panel having a melamine covering according to claim 1, **characterized in that** the outer finishing varnish (4) is a high-gloss varnish.

## Patentansprüche

1. Platte mit einer Melaminbeschichtung, umfassend eine Spanplatte (1), auf der eine Beschichtung vorgesehen ist, die das ästhetische Erscheinungsbild der Platte bestimmt, **dadurch gekennzeichnet, dass** die das ästhetische Erscheinungsbild bestimmende Beschichtung einen Melaminbogen (2), einen äußeren Überzugslack und eine Schicht (3) aus Schmelzlack umfasst, die auf dem Melaminbogen (2) angeordnet ist, um eine Klebebrücke zwischen dem Melaminbogen (2) und dem äußeren Überzugslack (4) bereitzustellen,

2. Platte mit einer Melaminbeschichtung nach Anspruch 1, **dadurch gekennzeichnet, dass** der äußere Überzugslack (4) ein Hochglanzlack ist.

## Revendications

1. Panneau présentant une couverture de mélamine, comprenant un panneau de particules (1) sur lequel une couverture est fournie déterminant l'apparence esthétique du panneau, **caractérisé en ce que** la couverture déterminant l'apparence esthétique comprend une feuille de mélamine (2), un vernis de finition externe et une couche (3) de vernis thermofondu disposés sur la feuille de mélamine (2) afin de fournir un pont adhésif entre ladite feuille de mélamine (2) et le vernis de finition extérieur (4).

2. Panneau présentant une couverture de mélamine selon la revendication 1, **caractérisé en ce que** le vernis de finition extérieur (4) est un vernis de brillant élevé.
